(19) Europäisches Patentamt
European Patent Office
Office européen des brevets

(11) EP 2 858 080 A1

(12) EUROPEAN PATENT APPLICATION
published in accordance with Art. 153(4) EPC

(43) Date of publication:
08.04.2015 Bulletin 2015/15

(51) Int Cl.:
H01G 11/22 (2013.01)    H01M 4/139 (2010.01)
H01M 4/36 (2006.01)    H01M 4/62 (2006.01)

(21) Application number: 13797224.6

(22) Date of filing: 29.05.2013

(86) International application number:
PCT/JP2013/064881

(87) International publication number:
WO 2013/180166 (05.12.2013 Gazette 2013/49)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 29.05.2012 JP 2012121596

(71) Applicant: Zeon Corporation
Tokyo 100-8246 (JP)

(72) Inventor: ISHII, Takuya
Tokyo 100-8246 (JP)

(74) Representative: Vossius & Partner
Siebertstrasse 3
81675 München (DE)

(54) COMPOSITE PARTICLES FOR ELECTROCHEMICAL ELEMENT ELECTRODES, ELECTROCHEMICAL ELEMENT ELECTRODE, AND ELECTROCHEMICAL ELEMENT

(57) Composite particles for electrochemical device electrode comprising a first particle-shaped binder with a glass transition temperature of 5°C or less, a second particle-shaped binder with a glass transition temperature of 10 to 80°C and with a gel content of 70 wt% or more, and an electrode active material, wherein a ratio of content of said second particle-shaped binder is 30 to 95 wt% in the total binder which is contained in said composite particles for electrochemical device electrode, are provided.

Fig. 1

EP 2 858 080 A1

**Description**

TECHNICAL FIELD

The present invention relates to composite particles for electrochemical device electrode, an electrochemical device electrode, and an electrochemical device.

BACKGROUND ART

Small-sized, light weight, high energy density and repeatedly chargeable and dischargeable lithium ion secondary cells and other electrochemical devices are rapidly growing in demand due to their properties. Lithium ion secondary cells are relatively large in energy density, so are being utilized in mobile phones, notebook personal computers, electric vehicles, and other fields.

These electrochemical devices are being required to be made lower in resistance, higher in capacity, better in mechanical properties and productivity, and otherwise improved more along with the expansion and growth in applications. In view of this situation, higher productivity methods of production are being sought for electrochemical device electrodes as well. Various improvements are being made to methods of production enabling high speed shaping and materials for Electrochemical device electrode which are suitable with the methods of production.

Electrochemical device electrodes are usually formed by laminating an electrode active material layer formed by bonding, by using a binder, an electrode active material and a conductive material which is used in accordance with need on a current collector. As a method of forming such an active material layer, for example, Patent Document 1 proposes a method of obtaining a slurry which contains a binder which comprises a polymer containing acrylic acid ester monomer units or methacrylic acid ester monomer units in 50 mass% or more and polyfunctional unsaturated monomer units in 0.5 to 10 mass% and has two or more glass transition temperatures, an electrode active material, and water, coating the obtained slurry on a current collector, and then drying it so as to produce an electrochemical device electrode and a method of pressing, by using a batch type press machine, composite particles obtained by spray drying the above slurry to produce an electrochemical device electrode.

However, in the art described in Patent Document 1, there was the problem that the obtained electrochemical device electrode was not sufficient in adhesion between the current collector and the electrode active material layer and, furthermore, when drying the electrode active material layer after coating the slurry used for forming the electrode active material layer, the drying caused the binder to end up concentrating locally at the surface in the electrode active material layer, when using this for an electrochemical device, the obtained electrochemical device ended up becoming inferior in internal resistance and low temperature cycle characteristic. Further, composite particles which are obtained by spray drying are inferior in fluidity at the temperature for shaping, so if roll forming or otherwise continuously shaping, the composite particles could not be uniformly supplied to the shaping zone and therefore uniform electrodes could not be formed. Therefore, there was the problem that the poor productivity batch press operation had to be performed.

PRIOR ART DOCUMENTS

PATENT DOCUMENTS

Patent Document 1: Japanese Patent No. 4432906

DISCLOSURE OF THE INVENTION

PROBLEM TO BE SOLVED BY THE INVENTION

The present invention has as its object the provision of composite particles for electrochemical device electrode which can give an electrochemical device electrode which is high in uniformity of thickness of an electrode active material layer and adhesion to a current collector, and is excellent in a low temperature cycle characteristic by a high production efficiency. Further, the present invention has as its object the provision of an electrochemical device electrode and electrochemical device which are obtained using such composite particles for electrochemical device electrode.

MEANS FOR SOLVING THE PROBLEMS

The inventors engaged in intensive studies to achieve the above objects and as a result discovered that in composite particles which contain a binder and electrode active material, by using, as a binder, a first particle-shaped binder with a glass transition temperature of 5°C or less and a second particle-shaped binder with a glass transition temperature of 10 to 80°C and with a gel content of 70 wt% or more, the above objects can be achieved and thereby completed the present invention.

That is, according to the present invention, there are provided composite particles for electrochemical device electrode which contain a first particle-shaped binder with a glass transition temperature of 5°C or less, a second particle-shaped binder with a glass transition temperature of 10 to 80°C and with a gel content of 70 wt% or more, and an electrode active material, wherein a ratio of content of said second particle-shaped binder is 30 to 95 wt% in the total binder which is contained in said composite particles for electrochemical device electrode.

In the composite particles for electrochemical device electrode of the present invention, preferably a difference of the glass transition temperature of the fi rst particle-shaped binder and the glass transition temperature of the second particle-shaped binder is 20°C or more.

In the composite particles for electrochemical device electrode of the present invention, preferably a gel content of the first particle-shaped binder is 35 wt% or more.

In the composite particles for electrochemical device electrode of the present invention, preferably the first particle-shaped binder and the second particle-shaped binder contain polymers which contain monomer units which have acidic functional groups in amounts of 0.5 wt% or more.

According to the present invention, there is provided an electrochemical device electrode obtained by laminating, on a current collector, an active material layer which contains any of the above composite particles for electrochemical device electrode.

According to the present invention, there is provided an electrochemical device comprising the above electrochemical device electrode.

Further, according to the present invention, there is provided a method of production of any of the above composite particles for electrochemical device electrode comprising a step of dispersing the first particle-shaped binder, the second particle-shaped binder, and the electrode active material in water to obtain a slurry and a step of spray drying the slurry to form it into particles.

Alternatively, according to the present invention, there is provided a method of production of any of the above composite particles for electrochemical device electrode comprising a step of dispersing the first particle-shaped binder and the second particle-shaped binder in water to obtain a binder dispersion and a step of fluidizing the electrode active material for fluidized bed granulation.

Furthermore, according to the present invention, there is provided a method of production of an electrochemical device electrode having an active material layer which is laminated on a current collector comprising a step of roll pressing composite particles for electrochemical device electrode which contain a first particle-shaped binder with a glass transition temperature of 5°C or less, a second particle-shaped binder with a glass transition temperature of 10 to 80 °C and with a gel content of 70 wt% or more, and an electrode active material by two stages or more so as to form the active material layer.

In the method of manufacturing an electrochemical device electrode of the present invention, preferably, a first stage roll pressing temperature is 60°C or less and a second stage or further roll pressing temperature is 80°C or more when roll pressing said composite particles for electrochemical device electrode by two stages or more.

EFFECTS OF THE INVENTION

According to the present invention, it is possible to provide composite particles for electrochemical device electrode which can give an electrochemical device electrode which is high in uniformity of thickness of an electrode active material layer and adhesion to a current collector, and is excellent in a low temperature cycle characteristic by a high production efficiency, and to provide an electrochemical device electrode and electrochemical device which are obtained using such composite particles for electrochemical device electrode.

BRIEF DESCRIPTION OF DRAWINGS

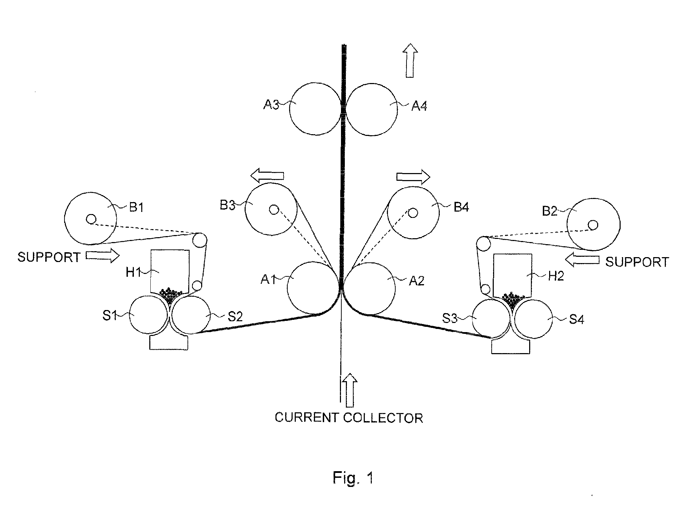

[FIG. 1] FIG. 1 is a view which shows an electrode manufacturing system used in the examples.

DESCRIPTION OF EMBODIMENTS

The composite particles for electrochemical device electrode of the present invention contain a first particle-shaped binder with a glass transition temperature of 5°C or less, a second particle-shaped binder with a glass transition temperature of 10 to 805°C and with a gel content of 70 wt% or more, and an electrode active material wherein a ratio of content of the second particle-shaped binder is 30 to 95 wt% in the total binder which is contained in the composite particles for electrochemical device electrode.

(Electrode Active Material)

The electrode active material used in the present invention is suitably selected by the type of the electrochemical device. For example, as an electrode active material for positive electrode of a lithium ion secondary cell, a metal oxide which can be reversibly doped and undoped with lithium ions may be mentioned. As such a metal oxide, for example, lithium cobalt oxide, lithium nickel oxide, lithium manganese oxide, lithium iron phosphate, lithium manganese phosphate, lithium vanadium phosphate, lithium iron vanadate, lithium nickel-manganese-cobalt oxide, lithium nickel-cobalt oxide, lithium nickel-manganese oxide, lithium iron-manganese oxide, lithium iron-manganese-cobalt oxide, lithium iron silicate, lithium iron-manganese silicate, vanadium oxide, copper vanadate, niobium oxide, titanium sulfide, molybdenum oxide, molybdenum sulfide, etc. may be mentioned. Note that, the positive electrode active materials illustrated above may be suitably used alone or may be used in a plurality of types mixed together in accordance with the application. Furthermore, polyacetylene, poly-p-phenylene, polyquinone, and other polymers may be mentioned. Among these, a lithium-containing metal oxide is preferably used.

Here, in the present invention, "dope" means storage, holding, adsorption, or insertion. The phenomenon of lithium ions and/or anions being into the positive electrode, the phenomenon of lithium ions being into the negative electrode, etc. may be mentioned. Further, "undope" means a phenomenon reverse to the above "dope", that is, release, desorption, or separation.

Further, as an electrode active material for negative electrode of the lithium ion secondary cell, graphitizable carbon, non-graphitizable carbon, activated carbon, pyrolytic carbon, and other low crystalline carbon (amorphous carbon), graphite (natural graphite, artificial graphite), carbon nanowool, carbon nanotubes, or composite carbon materials of these carbons with different physical properties, tin or silicon or other alloy-based materials, silicon oxide, tin oxide, vanadium oxide, lithium titanium oxide, or other oxides, polyacene, etc. may be mentioned. Note that, the electrode active materials illustrated above may be used alone or may be used as a plurality of types mixed together in accordance with the application.

The electrode active materials for positive electrode and for negative electrode of a lithium ion secondary cell are preferably ones formed into particle shape. If the particles are shaped as spheres, it is possible to form a higher density electrode by shaping into an electrode. Further, the electrode active materials for positive electrode and for negative electrode of a lithium ion secondary cell have volume average particle sizes, both in the case of the positive electrode and the negative electrode, of usually 0.1 to 100 $\mu$m, preferably 0.5 to 50 $\mu$m, more preferably 0.8 to 20 $\mu$m. Furthermore, the electrode active materials for positive electrode and for negative electrode of a lithium ion secondary cell are not particularly limited in tap densities, but for positive electrode, one of 2 g/cm$^3$ or more and for negative electrode, one of 0.6 g/cm$^3$ or more are preferably used.

As an electrode active material for positive electrode of the lithium ion capacitor, activated carbon, a polyacene-based organic semiconductor (PAS), carbon nanotubes, carbon whiskers, graphite, etc., which can be reversibly doped and undoped with anions and/or cations, may be mentioned. Among these as well, activated carbon and carbon nanotubes are preferable.

Further, as an electrode active material for negative electrode of the lithium ion capacitor, it is possible to use the materials which are illustrated as the above-mentioned electrode active materials for negative electrode of the lithium ion secondary cell.

The electrode active materials for positive electrode and for negative electrode of the lithium ion capacitor have volume average particle sizes of usually 0.1 to 100 $\mu$m, preferably 0.5 to 50 $\mu$m, more preferably 0.8 to 20 $\mu$m. Further, when using the activated carbon as the active material for positive electrode of the lithium ion capacitor, the activated carbon has a specific surface area of 30 m$^2$/g or more, preferably 500 to 3,000 m$^2$/g, more preferably 1,500 to 2,600 m$^2$/g. Up to a specific surface area of about 2,000 m$^2$/g, the tendency is that the larger the specific surface area, the greater the electrostatic capacity per unit weight of activated carbon, but if the specific surface area exceeds about 2,000 m$^2$/g, the electrostatic capacity does not increase that much. Conversely, the tendency is for the electrode active material layer to fall in density and fall in electrostatic capacity density. Further, having the size of the pores of the activated carbon match the size of the electrolyte ions is preferable from the viewpoint of the rapid charging and discharging characteristic which are features of a lithium ion capacitor. Therefore, by suitably selecting the electrode active material, it is possible to obtain an electrode active material layer which has a desired capacity density and input-output characteristics.

Alternatively, as a electrode active materials for positive electrode and for negative electrode of an electric double layer capacitor, it is possible to use the materials illustrated as the above-mentioned electrode active material for positive electrode of the lithium ion capacitor.

(First Particle-Shaped Binder)

The first particle-shaped binder used in the present invention is a particle-shaped binder with a glass transition temperature of 5°C or less.

The first particle-shaped binder used in the present invention may be any which has a particle shape, but in the composite particles for electrochemical device electrode of the present invention as well, one which can be present in a state holding the particle state, that is, in a state holding the particle state on the electrode active material, is preferable. By being present in the composite particles for electrochemical device electrode in a state holding the particle shape, it becomes possible to bond the particles of the electrode active material well causing an increase in the internal resistance. That is, it is possible to make the binding ability of the electrode active material good without making the internal resistance increase. Note that, in the present invention, "state holding the particle shape" does not have to be a state holding the particle shape completely. It is sufficient that it be a state holding the particle shape to a certain extent. For example, as a result that it makes the particles of the electrode active material bonded together, it may be a shape which is pressed in a certain extent by force being given by these electrode active materials.

The first particle-shaped binder used in the present invention has a glass transition temperature (Tg) of 5°C or less, preferably -40 to +5°C, more preferably -40 to -5°C, furthermore preferably -40 to-10°C. In the present invention, by combining for use the first particle-shaped binder with a glass transition temperature of 5°C or less and the later explained second particle-shaped binder with a glass transition temperature of 10 to 80°C and with a gel content of 70 wt% or more, it is possible to make the electrode active material layer which is obtained by using the composite particles for electrochemical device electrode of the present invention high in uniformity of thickness of the electrode active material layer and adhesion to the current collector and excellent in low temperature cycle characteristic. If the glass transition temperature of the first particle-shaped binder is too high, the pressing temperature when making the first particle-shaped binder soften and forming the electrode active material layer has to be made high and as a result the uniformity of thickness of the obtained electrode active material layer ends up falling. Further, the obtained electrode active material layer ends up falling in flexibility. On the other hand, if the glass transition temperature of the first particle-shaped binder is too low, sometimes the obtained electrode active material layer ends up falling in strength, so the glass transition temperature is preferably in the above temperature range.

Further, the first particle-shaped binder used in the present is one which have a glass transition temperature in the above range, but in addition to the glass transition temperature being in the above range, the gel content is preferably 35 wt% or more, more preferably 35 to 95 wt%, furthermore preferably 50 to 95 wt%, particularly preferably 70 to 95 wt%. By using a first particle-shaped binder constituted by one with a gel content in the above range, the obtained electrode active material, layer can be made higher in strength. Note that, in the present invention, the gel content of the first particle-shaped binder is calculated as the insolubles in the first particle-shaped binder with respect to tetrahydrofuran. Specifically, it can be calculated by measuring the dry weight of the first particle-shaped binder, then immersing this in tetrahydrofuran for 24 hours and finding the weight ratio of the components which were not extracted by the tetrahydrofuran.

As such a first particle-shaped binder, for example, a polymer which is obtained by emulsion polymerization using water etc. as a dispersant may be mentioned. In this case, the first particle-shaped binder is usually used in a state dispersed in the dispersant constituted by water. As specific examples of such a polymer, a fluorine-based polymer, diene-based polymer, acrylate-based polymer, silicon-based polymer, etc. may be mentioned. Among these, a diene-based polymer and acrylate-based polymer are preferable, while an acrylate-based polymer is particularly preferably used.

The acrylate-based polymer is a homopolymer of a (meth)acrylic acid ester (meaning an acrylic acid ester and/or methacrylic acid ester, same below) or a copolymer which is obtained by polymerizing a monomer mixture which contains these.

As specific examples of the (meth)acrylic acid ester, methyl (meth)acrylate, ethyl (meth)acrylate, propyl (meth)acrylate, isopropyl (meth) acrylate, n-butyl (meth)acrylate, isobutyl (meth)acrylate, cyclohexyl (meth)acrylate, 2-ethylhexyl (meth)acrylate, isopentyl (meth)acrylate, isooctyl (meth)acrylate, isobornyl (meth)acrylate, isodecyl (meth)acrylate, lauryl (meth)acrylate, stearyl (meth)acrylate, and tridecyl (meth)acrylate, or other (meth)acrylic acid alkyl esters; butoxyethyl (meth)acrylate, ethoxydiethyleneglycol (meth)acrylate, methoxydipropyleneglycol (meth)acrylate, methoxypolyetryleneglycol (meth)acrylate, phenoxyethyl (meth)acrylate, tetrahydrofurfuryl (meth)acrylate, or other ether-group containing (meth)acrylic acid esters; 2-hydroxyethyl (meth)acrylate, 2-hydroxypropyl (meth)acrylate, 2-hydroxy-3-phenoxypropyl (meth)acrylate, 2-(meth)acryloyloxyethyl-2-hydroxyethylphthalic acid, or other hydroxyl-group containing (meth)acrylic acid esters; 2-(meth)acryloyloxyethylphthalic acid, 2-(meth)acryloyloxyethylphthalic acid, or other carboxylic acid-containing (meth)acrylic acid esters; perfluorooctylethyl (meth)acrylate or other fluorine-group containing (meth)acrylic acid esters; ethyl (meth)acrylate phosphate or other phosphoric acid-group containing (meth)acrylic acid esters; glycidyl (meth)acrylate or other epoxy-group containing (meth)acrylic acid esters; dimethylaminoethyl (meth)acrylate or other amino-group containing (meth)acrylic acid esters; etc. may be mentioned.

These (meth)acrylic acid esters may be used alone or in combinations of two or more types. Among these, from the viewpoint of being able to make the first particle-shaped binder one low in swellability with respect to the electrolytic solution and, due to this, being able to improve the cycle characteristic when made into an electrode, a (meth)acrylic acid alkyl ester is preferable.

The ratio of content of the (meth)acrylic acid ester units in the polymer which forms the first particle-shaped binder is preferably 50 to 95 wt%, more preferably 80 to 90 wt%. By making the ratio of content of the (meth)acrylic acid ester units in the above range, it is possible to improve the flexibility when made into an electrochemical device electrode and possible to raise the resistance to cracking. Note that, in the present invention, for example, when using a (meth)acrylic acid ester constituted by a (meth)acrylic acid alkyl ester, for example, by adjusting the ratio of a (meth)acrylic acid alkyl ester with one to two carbon atoms of the alkyl group and a (meth)acrylic acid alkyl ester with four or more carbon atoms of the alkyl group, it is possible to control the glass transition temperature of the first particle-shaped binder.

Note that, in the above explanation, as one example of the method of control of the glass transition temperature, the method of adjusting the ratio between the (meth)acrylic acid alkyl ester units with one to two carbon atoms of the alkyl group and the (meth)acrylic acid alkyl ester units with four or more carbon atoms of the alkyl group was shown, but the method for controlling the glass transition temperature is not particularly limited to such a method. For example, when adjusting the ratio of these so as to control the glass transition temperature, in the polymer which forms the first particle-shaped binder, the ratio of content of the (meth)acrylic acid alkyl ester units with one to two carbon atoms of the alkyl group is preferably made 48 to 98 wt%, more preferably 58 to 98 wt%, furthermore preferably 63 to 98 wt%. Further, in the polymer which forms the first particle-shaped binder, the ratio of content of the (meth)acrylic acid alkyl ester units with four or more carbon atoms of the alkyl group is preferably made 0 to 50 wt%, more preferably 0 to 40 wt%, furthermore preferably 0 to 35 wt%.

Further, the acrylate-based polymer may be a copolymer of the above-mentioned (meth)acrylic acid ester and a monomer which is copolymerizable with this. In the case that the slurry is obtained by using the components including the first particle-shaped binder, when obtaining the composite particles for electrochemical device electrode of the present invention, from the viewpoint of being able to improve the stability of the obtained slurry, it is preferable to use a copolymerizable monomer constituted by a monomer which has acidic functional groups and thereby include monomer units which have acidic functional groups.

As the monomer which has acidic functional groups, acrylic acid, methacrylic acid, itaconic acid, maleic acid, fumaric acid, etc. may be mentioned. These respectively may be used alone or as two types or more combined. Among these, acrylic acid, methacrylic acid, itaconic acid are preferable, methacrylic acid and itaconic acid are more preferable, and methacrylic acid is particularly preferable.

In the polymer which forms the first particle-shaped binder, the ratio of content of the monomer units which have acidic functional groups is preferably 0.5 wt% or more, more preferably 0.5 to 10 wt%, furthermore preferably 0.5 to 5 wt%, particularly preferably 0.5 to 3 wt%. By making the ratio of content of the monomer units which have acidic functional groups in the above range, it is possible to enhance more the effect of improvement of the stability when making a slurry.

Further, the acrylate-based polymer may be a copolymer of, in addition to the above-mentioned (meth)acrylic acid ester and monomer which has acidic functional groups, a further monomer which is copolymerizable with the same. As such a copolymerizable monomer, for example, a cross-linkable monomer may be mentioned.

As the cross-linkable monomer, vinyl (meth)acrylate, allyl (meth)acrylate, styryl (meth)acrylate, undecenyl (meth)acrylate, divinylbenzene, ethyleneglycol diacrylate, or other monomers which have two or more carbon-carbon unsaturated bonds may be mentioned.

In the polymer which forms the first particle-shaped binder, the ratio of content of the cross-linkable monomer units may be suitably adjusted in accordance with the type of the cross-linkable monomer which is used so that the gel content becomes the above-mentioned preferable range. As a result, the obtained electrode active material layer can be further enhanced in strength.

Furthermore, the acrylate-based polymer may also be a copolymer of the above-mentioned monomer and a copolymerizable other monomer. As such another monomer, for example, an $\alpha,\beta$-unsaturated nitrile monomer, carboxylic acid esters which have two or more carbon-carbon double bonds, an amide-based monomer, olefins, a diene-based monomer, vinyl ketones, a heterocyclic structure-containing vinyl compound, etc. may be mentioned.

Further, the first particle-shaped binder has a volume average particle size of preferably 10 to 50,000 nm, more preferably 10 to 10,000 nm, furthermore preferably 50 to 5,000 nm, particularly preferably 100 to 3,000 nm. By making the volume average particle size of the first particle-shaped binder in the above range, the stability when made into a slurry can be made good while the binding force as a binder can be enhanced.

In the composite particles for electrochemical device electrode of the present invention, the ratio of content of the first particle-shaped binder is preferably 5 to 60 wt% with respect to 100 wt% of the total binder which is contained in the composite particles for electrochemical device electrode, more preferably 5 to 50 wt%, furthermore preferably 5 to 40 wt%. Further, the ratio of content of the first particle-shaped binder with respect to 100 parts by weight of the electrode active material is preferably 0.2 to 7 parts by weight, more preferably 0.2 to 4 parts by weight, furthermore preferably 0.2 to 2 parts by weight. By making the ratio of content of the first particle-shaped binder in the above ranges, the obtained electrode becomes uniform in thickness and, furthermore, the electrode can be made excellent in flexibility and strength.

(Second Particle-Shaped Binder)

The second particle-shaped binder used in the present invention is a particle-shaped binder which has a glass transition temperature of 10 to 80°C and which has a gel content of 70 wt% or more.

The second particle-shaped binder used in the present invention, in the same way as the above-mentioned first particle-shaped binder, may be one which has a particle shape, but in the composite particles for electrochemical device electrode of the present invention as well, one which can be present in a state holding the particle state, that is, in a state holding the particle state on the electrode active material, is preferable. By being present in the composite particles for electrochemical device electrode in a state holding the particle shape, it becomes possible to bond the particles of the electrode active material well without causing an increase in the internal resistance.

The second particle-shaped binder used in the present invention has a glass transition temperature (Tg) of 10 to 80°C, preferably 10 to 65°C, more preferably 10 to 50°C, furthermore preferably 15 to 50°C. If the second particle-shaped binder is too low in glass transition temperature, the obtained electrode active material layer ends up falling in uniformity of thickness. On the other hand, if the second particle-shaped binder is too high in glass transition temperature, when pressing the electrode active material layer and a current collector at a predetermined temperature to improve the adhesion, the second particle-shaped binder insufficiently softens and as a result the adhesion of the obtained electrode active material layer to the current collector ends up deteriorating. Alternatively, when making the temperature at the time of pressing higher to improve the adhesion between the electrode active material layer and the current collector, the various components which form the electrode active material layer are liable to end up deteriorating. Further, the obtained electrode active material layer is liable to end up falling in flexibility.

Further, the second particle-shaped binder used in the present invention has a gel content of 70 wt% or more, preferably 70 to 95 wt%, more preferably 75 to 95 wt%, furthermore preferably 75 to 90 wt%. If the second particle-shaped binder has too low a gel content, the adhesion of the electrode active material layer to the current collector ends up deteriorating. On the other hand, if the second particle-shaped binder is too high in gel content, the obtained electrode active material layer ends up falling in strength. Note that, in the present invention, the gel content of the second particle-shaped binder, in the same way as the above-mentioned first particle-shaped binder, is calculated as the insolubles in the second particle-shaped binder with respect to tetrahydrofuran.

Further, the glass transition temperature of the second particle-shaped binder may be in the above range, but in relation with the above-mentioned glass transition temperature of the first particle-shaped binder, the difference of these, that is, "(glass transition temperature of second particle-shaped binder)-(glass transition temperature of first particle-shaped binder)" is preferably 20°C or more, more preferably 20 to 150°C in range, furthermore preferably 20 to 100°C in range, particularly preferably 30 to 80°C in range. By the difference of the glass transition temperature being in this range, the obtained electrode active material layer can be made better in uniformity of thickness.

As such a second particle-shaped binder, in the same way as the above-mentioned first particle-shaped binder, for example, a polymer which is obtained by emulsion polymerization using water etc.as a dispersant may be mentioned. In this case, the second particle-shaped binder is usually used in a state dispersed in the dispersant constituted by water. As a specific example of such a polymer, a fluorine-based polymer, diene-based polymer, acrylate-based polymer, silicon-based polymer, etc. may be mentioned, Among these, a diene-based polymer or an acrylate-based polymer is preferable, while an acrylate-based polymer is particularly preferably used.

The acrylate-based polymer is a homopolymer of a (meth)acrylic acid ester or a copolymer which is obtained by polymerizing a monomer mixture which contains these.

As specific examples of the (meth)acrylic acid ester, ones similar to the above-mentioned first particle-shaped binder may be mentioned. The (meth)acrylic acid esters respectively may be used alone or as two types or more combined. Further, among the (meth)acrylic acid esters, from the viewpoint of being able to make the second particle-shaped binder one low in swellability with respect to the electrolytic solution and, due to this, being able to improve the cycle characteristic when made into an electrode, a (meth)acrylic acid alkyl ester is preferable.

The ratio of content of the (meth)acrylic acid ester units in the polymer which forms the second particle-shaped binder is preferably 50 to 99 wt%, more preferably 70 to 99 wt%. By making the ratio of content of the (meth)acrylic acid ester units in the above range, it is possible to improve the flexibility when made into an electrochemical device electrode and possible to raise the resistance to cracking. Note that, in the present invention, for example, when using a (meth)acrylic acid ester constituted by a (meth)acrylic acid alkyl ester, for example, by adjusting the ratio of a (meth)acrylic acid alkyl ester with one to two carbon atoms of the alkyl group and a (meth)acrylic acid alkyl ester with four or more carbon atoms of the alkyl group, it is possible to control the glass transition temperature of the second particle-shaped binder.

Note that, in the above explanation, as one example of the method of control of the glass transition temperature, the method of adjusting the ratio between the (meth)acrylic acid alkyl ester units with one to two carbon atoms of the alkyl group and the (meth)acrylic acid alkyl ester units with four or more carbon atoms of the alkyl group was shown, but the method of controlling the glass transition temperature is not particularly limited to such a method. For example, when adjusting the ratio of these so as to control the glass transition temperature, in the polymer which forms the second particle-shaped binder, the ratio of content of the (meth)acrylic acid alkyl ester units with one to two carbon atoms of the alkyl group is preferably made 0 to 44 wt%, more preferably 3 to 44 wt%, furthermore preferably 12 to 40 wt%. Further, in the polymer which forms the second particle-shaped binder, the ratio of content of the (meth)acrylic acid alkyl ester units with four or more carbon atoms of the alkyl group is preferably made 53 to 98 wt%, more preferably 53 to 95 wt%, furthermore preferably 57 to 86 wt%.

Further, the acrylate-based polymer may be a copolymer of the above-mentioned (meth)acrylic acid ester and a monomer which is copolymerizable with this. In the case that the slurry is obtained by using the components including the second particle-shaped binder, when obtaining the composite particles for electrochemical device electrode of the present invention, from the viewpoint of being able to improve the stability of the obtained slurry, it is preferable to use as a copolymerizable monomer constituted by a monomer which has acidic functional groups and thereby include monomer units which have acidic functional groups.

As the monomer which has acidic functional groups, ones similar to the above-mentioned first particle-shaped binder may be used. In the polymer which forms the second particle-shaped binder, the ratio of content of the monomer units which have acidic functional groups is preferably 0.5 wt% or more, more preferably 0.5 to 10 wt%, furthermore preferably 0.5 to 5 wt%, particularly preferably 0.5 to 3 wt%. By making the ratio of content of the monomer units which have acidic functional groups in the above range, it is possible to enhance more the effect of improvement of the stability when making a slurry.

Further, the acrylate-based polymer may be a copolymer of, in addition to the above-mentioned (meth)acrylic acid ester and monomer which has acidic functional groups, a further monomer which is copolymerizable with the same. As such a copolymerizable monomer, for example, a cross-linkable monomer may be mentioned.

As the cross-linkable monomer, ones similar to the above-mentioned first particle-shaped binder may be used. In the polymer which forms the second particle-shaped binder, the ratio of content of the cross-linkable monomer units can be suitably adjusted in accordance with the type of the cross-linkable monomer which is used so as to make the gel content of the second particle-shaped binder in the above-mentioned predetermined range.

Furthermore, the acrylate-based polymer may be a copolymer of the above-mentioned monomers and a copolymerizable other monomer. As such another monomer, for example, an $\alpha,\beta$-unsaturated nitrile monomer, a carboxylic acid ester which has two or more carbon-carbon double bonds, an amide-based monomer, olefins, a diene-based monomer, vinyl ketones, a heterocyclic structure-containing vinyl compound, etc. may be mentioned.

Further, the second particle-shaped binder has a volume average particle size of preferably 10 to 50,000 nm, more preferably 10 to 10,000 nm, furthermore preferably 50 to 5,000 nm, particularly preferably 100 to 3,000 nm. By making the volume average particle size of the second particle-shaped binder in the above range, the stability when made into a slurry can be made good while the binding force as a binder can be enhanced.

In the composite particles for electrochemical device electrode of the present invention, the ratio of content of the second particle-shaped binder is 30 to 95 wt% with respect to 100 wt% of the total binder which is contained in the composite particles for electrochemical device electrode, preferably 40 to 95 wt%, more preferably 50 to 95 wt%, furthermore preferably 60 to 95 wt%. If the ratio of content of the second particle-shaped binder is too small, the adhesion with respect to the current collector when made into an electrode active material layer ends up deteriorating. On the other hand, if the ratio of content of the second particle-shaped binder is too large, the above-mentioned ratio of content of the first particle-shaped binder ends up becoming relatively smaller and as a result the uniformity of thickness of the obtained electrode active material layer ends up falling. Note that, the ratio of content of the second particle-shaped binder with respect to 100 parts by weight of the electrode active material is preferably 0.2 to 20 parts by weight, more preferably 0.5 to 15 parts by weight, furthermore preferably 0.5 to 10 parts by weight.

(Composite Particles for Electrochemical Device Electrode)

The composite particles for electrochemical device electrode of the present invention contain the above-mentioned first particle-shaped binder, second particle-shaped binder, and electrode active material, but these are not present as individually independent particles. At least two ingredients of these ingredients, preferably all ingredients, form single particles.

Specifically, preferably pluralities of the individual particles of the different ingredients bond together to form secondary particles and pluralities (preferably several to several dozen of) particles of the electrode active material are bonded by the first particle-shaped binder and second particle-shaped binder to thereby form masses of particles.

Further, the composite particles for electrochemical device electrode are not particularly limited in shape and structure, but from the viewpoint of the fluidity, the shape is preferably one close to a sphere. The structure is preferably one where the first particle-shaped binder and second particle-shaped binde are not segregating at the surface of the composite particles, but are uniformly dispersed in the composite particles.

Next, the method of production of composite particles for electrochemical device electrode of the present invention will be explained.

The method of production of composite particles for electrochemical device electrode of the present invention is not particularly limited, but the following explained two production methods can be used to easily obtain composite particles for electrode.

First, the first production method is the spray drying granulation method. The composite particles for electrochemical device electrode of the present invention can be relatively easily obtained according to the spray drying granulation method which is explained below, so this is preferable. Below, the spray drying granulation method will be explained.

First, a slurry for composite particles which contains the first particle-shaped binder, second particle-shaped binder, and electrode active material is prepared. The slurry for composite particles can be prepared by making the first particle-shaped binder, second particle-shaped binder, and electrode active material and the conductive material, dispersant, or any other component which is added in accordance with need disperse or dissolve in a solvent. Note that, in this case, when the first particle-shaped binder and the second particle-shaped binder are dispersed in a dispersant constituted by water, they can be added in the state dispersed in water. As the solvent used to obtain the slurry for composite particles, usually water is used, but it is also possible to use a mixed solvent of water and an organic solvent. As the organic solvent, for example, methyl alcohol, ethyl alcohol, propyl alcohol, or other alkyl alcohols; acetone, methylethylketone, or other alkylketones; tetrahydrofuran, dioxane, diglyme, or other ethers; diethyl formamide, dimethyl acetoamide, N-methyl-2-pyrrolidone, dimethyl imidazolidinone, or other amides, etc. may be mentioned, but alkyl alcohols are preferable. If jointly using an organic solvent with a boiling point lower than water, it is possible to accelerate the drying speed at the time of spray drying granulation. Further, if jointly using an organic solvent with a boiling point lower than water, the first particle-shaped binder and second particle-shaped binder change in dispersability and the viscosity or fluidity of the slurry can be adjusted by the amount or type of the solvent, so the production efficiency can be improved.

The amount of the solvent which is used for preparing the slurry for composite particles is one which gives a solid content concentration in the slurry for composite particles of preferably 1 to 50 wt%, more preferably 5 to 50 wt%, furthermore preferably 10 to 30 wt% in range. By making the solid content concentration in the above range, it is possible to uniformly disperse the binder, so this is preferable.

Further, the viscosity of the slurry for composite particles is, at room temperature, preferably 10 to 3,000 mPa·s, more preferably 30 to 1,500 mPa·s, furthermore preferably 50 to 1,000 mPa·s in range. If the viscosity of the slurry for composite particles is in this range, it is possible to raise the productivity of the process of spray drying granulation.

Further, in the present invention, when preparing the slurry for composite particles, in accordance with need, a conductive material or a dispersant may be added.

The conductive material may be a particle-shaped material which has conductivity and is not particularly limited, but, for example, furnace black, acetylene black, ketjen black, or other conductive carbon black; natural graphite, artificial graphite, or other graphite; polyacrylonitrile-based carbon fiber, pitch-based carbon fiber, vapor phase carbon fiber, or other carbon fiber; may be mentioned. Among these, acetylene black and ketjen black are preferable. The conductive material is not particularly limited in volume average particle size, but one which is smaller than the volume average particle size of the electrode active material is preferable. Usually, the size is 0.001 to 10 μm, more preferably 0.05 to 5 μm, furthermore preferably 0.01 to 1 μm in range. If the volume average particle size of the conductive material is in the above range, it is possible to use a smaller amount to realize sufficient conductivity. When adding a conductive material, the amount of use of the conductive material is not particularly limited so long as in a range not detracting from the effect of the present invention, but the amount is preferably 0.1 to 50 parts by weight with respect to 100 parts by weight of the electrode active material, more preferably 0.5 to 15 parts by weight, furthermore preferably 1 to 10 parts by weight. By making the ratio of content of the conductive material in the above range, it becomes possible to hold the obtained electrochemical device high in capacity while sufficiently reducing the internal resistance.

The dispersant is not particularly limited so long as a resin which can be dissolved in a solvent, but for example carboxymethyl cellulose, methyl cellulose, ethyl cellulose, hydroxypropyl cellulose, and hydroxypropylmethyl cellulose or other cellulose-based polymer and their ammonium salts or alkali metal salts; an ammonium salt or alkali metal salt of polyacrylic acid or polymethacrylic acid; polyvinyl alcohol, modified polyvinyl alcohol, polyethylene oxide; polyvinyl pyrrolidone, polycarboxylic acid, oxidized starch, starch phosphate, casein, various modified starches, chitin, chitosan derivatives, etc. may be mentioned. These dispersants can be used alone or as two types or more combined. Among these, as a dispersant, a cellulose-based polymer is preferable, while carboxymethyl cellulose or its ammonium salt or alkali metal salt is particularly preferable.

The method or order of dispersing or dissolving the first particle-shaped binder, second particle-shaped binder, and electrode active material and the conductive material, dispersant, or any other component which is added in accordance with need in a solvent is not particularly limited. Further, as the mixing device, for example, a ball mill, sand mill, beads mill, pigment disperser, stone mill, ultrasonic disperser, homogenizer, planetary mixer, or other mixing equipment may be mentioned. The mixing is usually performed at room temperature to 80°C in range for 10 minutes to several hours.

Next, the obtained slurry for composite particles was granulated by spray drying. Spray drying is a method of spraying a slurry in hot air to dry it. As the device which is used for spraying the slurry, an atomizer may be mentioned. As an atomizer, two types of devices of a rotary disk system and a pressurizing system may be mentioned. The rotary system type is a system which introduces the slurry at the approximate center of a disk which is rotating at a high speed, uses the centrifugal force of the disk to fling the slurry to the outside of the disk, and atomizes the slurry at that time. In the rotary disk type, the rotational speed of the disk depends on the size of the disk, but is usually 5,000 to 30,000 rpm, preferably 15,000 to 30,000 rpm. The lower the rotational speed of the disk, the larger the sprayed drops and the greater the average particle size of the obtained composite particles. As the rotary disk type atomizer, the pin type and the vane type may be mentioned. The pin type atomizer is one type of centrifugal atomizer which uses a spray disk. The spray disk is configured by a top and bottom mounting disk between which a plurality of spray rollers are detachably attached on a substantially concentric circle along their circumferential edges. The slurry for composite particles is introduced from the center of the spray disk, deposits on the spray rollers by centrifugal force, passes over the roller surfaces to the outside, and finally detaches from the roller surfaces and is sprayed outward. Further, a vane type atomizer is comprised of a spray disk at the inside of which slits are cut and through which slurry for composite particles passes. On the other hand, the pressurized system is a system which pressurizes the slurry for composite particles and sprays it from a nozzle to dry it. A pressurized nozzle system or a pressurized two-fluid nozzle system etc. may be mentioned.

The temperature of the slurry for composite particles which is sprayed is usually room temperature, but it may also be made a temperature higher than room temperature by heating. Further, the hot air temperature at the time of spray drying is usually 80 to 250°C, preferably 100 to 200°C. In the spray drying method, the method of blowing in the hot air is not particularly limited. For example, the system where the hot air and spray directions are concurrent in the horizontal direction, the system where the slurry is sprayed at the top part of the drying tower and descends together with the hot air, the system where the sprayed drops and hot air contact countercurrently, the system where the sprayed drops flow concurrently with the initial hot air then descend by gravity and contact it countercurrently, etc. may be mentioned.

According to the spray drying granulation method, the above production method can be used to obtain composite particles for electrochemical device electrode which contain a first particle-shaped binder, second particle-shaped binder, and electrode active material and a conductive material, dispersant, or any other component which is added in accordance with need.

Alternatively, the second production method for the composite particles for electrochemical device electrode is the fluidized bed granulation method. The fluidized bed granulation method includes a step of obtaining a slurry which contains a first particle-shaped binder and second particle-shaped binder and a conductive material, dispersant, or any other component which is added in accordance with need and a step of making the electrode active material flow through a heated stream of gas, spraying the slurry obtained there, making the particles of the electrode active material bond together, and drying the same.

Below, the fluidized bed granulation method will be explained.

First, a slurry which contains the first particle-shaped binder and second particle-shaped binder and a conductive material, dispersant, or any other component which is added in accordance with need is obtained. Note that, in this case, when the first particle-shaped binder and the second particle-shaped binder are dispersed in a dispersant constituted by water, they can be added in the state dispersed in water. Further, as the solvent which is used for obtaining the slurry, most suitably water is used, but an organic solvent can also be used. As the organic solvent, ones similar to those of the above-mentioned spray drying granulation method may be used.

The amount of the solvent which is used when preparing the slurry is, by solid content concentration of the slurry, usually 1 to 50 wt%, preferably 5 to 50 wt%, more preferably 10 to 30 wt% in range. When the amount of the solvent is in this range, the first particle-shaped binder and the second particle-shaped binder are uniformly dispersed, so this is preferable.

Further, the method or order of dispersing or dissolving the first particle-shaped binder and second particle-shaped binder and the conductive material, dispersant, or any other component which is added in accordance with need in the solvent is not particularly limited. Further, as the mixing device, ones which are similar to those of the above-mentioned spray drying granulation method may be used.

Next, the electrode active material is fluidized, then the above obtained slurry is sprayed there for fluidized granulation. As the fluidized granulation, a method by a fluidized bed, a method by an arranged fluidized bed, a method by a spouted bed, etc. may be mentioned. The method by a fluidized bed uses hot air to make the electrode active material fluid and sprays into this from a sprayer etc. the above obtained slurry to cause aggregation and granulation, The method by an arranged fluidized bed is similar to the one by the above-mentioned fluidized bed, but gives a circulating flow to the powder in the bed utilizes the grading effect to grow the particles relatively large and discharge the resultant particles. Further, the method by a spouted bed utilizes the features of a spouted bed to make slurry deposit on coarse particles from a sprayer etc. and dry it at the same time to cause granulation. In the present invention, the method by the fluidized bed or arranged fluidized bed among these three methods is preferable.

The temperature of the slurry which is sprayed is usually room temperature, but the slurry may also be warmed to make it more than room temperature. The temperature of the hot air which is used for fluidization is usually 70 to 300°C, preferably 80 to 200°C.

According to fluidized bed granulation method, by the above production method, it is possible to obtain composite particles for electrochemical device electrode which contain the first particle-shaped binder and second particle-shaped binder and a conductive material, dispersant, or any other component which is added in accordance with need.

The composite particles for electrochemical device electrode of the present invention are produced in the above way.

(Electrochemical Device Electrode)

The electrochemical device electrode of the present invention is comprised of an active material layer comprised of an electrode active material layer which contains the above-mentioned composite particles for electrochemical device electrode of the present invention and which is laminated on a current collector. As the material for current collector, for example, a metal, carbon, conductive polymer, etc. can be used. Preferably, a metal is used. As the metal, usually, copper, aluminum, platinum, nickel, tantalum, titanium, stainless steel, and alloys etc. may be used. Among these, from the viewpoint of the conductivity and voltage resistance, copper, aluminum or an aluminum alloy is preferably used. Further, when a high voltage resistance is required, it is possible to suitably use the high purity aluminum which is disclosed in Japanese Patent Publication No. 2001-176757A etc. The current collector is a film or sheet shape. The thickness is suitably selected in accordance with the objective of use, but is usually 1 to 200 $\mu$m, preferably 5 to 100 $\mu$m, more preferably 10 to 50 $\mu$m.

Note that, as the method of forming the electrode active material layer which contains the composite particles for electrochemical device electrode of the present invention, for example, the method of pressing the above-mentioned composite particles for electrochemical device electrode of the present invention by two stages or more of roll pressing etc. may be mentioned. In this case, when pressing by two stages or more of roll pressing, the two stages or more of roll pressing may all be performed on the current collector or the first stage of roll pressing may be performed on a support which is separate from the current collector and the active material layer which is obtained by the first stage of roll pressing may be transferred from the support to the current collector and then the second stage and later roll pressing performed.

When roll pressing the composite particles for electrochemical device electrode of the present invention on the current collector, the roll pressing temperature is preferably made as follows. That is, at the time of the first stage of roll pressing, the roll temperature is preferably made 60°C or less, more preferably 20 to 60°C, furthermore preferably 25 to 60°C, particularly preferably 30 to 50°C, while at the time of the second stage and later roll pressing, the roll temperature is preferably made 80°C or more, more preferably 80 to 150°C, furthermore preferably 80 to 130°C, particularly preferably 80 to 120°C.

In the present invention, by making the first stage and the second stage and later roll pressing temperatures in the above ranges, an electrochemical device electrode which is high in uniformity of thickness of the electrode active material layer and adhesion with respect to the current collector and is excellent in low temperature cycle characteristic can be suitably obtained. In particular, by performing the first stage of roll pressing under the above temperature conditions, at the time of the first stage of roll pressing, it is possible to not make the second particle-shaped binder which is contained in the composite particles for electrochemical device electrode of the present invention soften and make only the first particle-shaped binder soften. Due to this, the fluidity of the composite particles is suitably held. As a result, the composite particles can be successively supplied to the shaping zone at a constant rate, and the electrode active material layer having an excellent uniformity of thickness can be obtained by the first stage of pressing. In addition to this, by performing the second stage and later roll pressing under the above temperature conditions, when performing the second stage and later roll pressing, the second particle-shaped binder which is contained in the composite particles for electrochemical device electrode of the present invention can be suitably made to soften. Due to this, the second stage of pressing enables the adhesion between the electrode active material layer and the current collector to be improved while maintaining the excellent shape of the electrode active material layer which was obtained by the first stage of pressing. Further, as a result, it is possible to suitably obtain an electrochemical device electrode which is high in uniformity of thickness of the electrode active material layer and adhesion with respect to the current collector and which is excellent in low temperature cycle characteristic.

Note that, if the first stage pressing temperature is too high, the uniformity of thickness of the obtained electrode active material layer and adhesion with respect to the current collector are liable to end up falling and the low temperature cycle characteristic when made into an electrochemical device is liable to end up falling. Further, if the second stage and later pressing temperature is too low, the adhesion with respect to the current collector of the obtained electrode active material layer and the adhesion between the composite particles for electrochemical device electrode with each other are liable to end up falling. Furthermore, when not performing the second stage and later pressing and performing only the first stage of pressing, the adhesion with respect to the current collector of the obtained electrode active material layer is liable to end up falling and the low temperature cycle characteristic when made into an electrochemical device is liable to end up falling.

When pressing the composite particles for electrochemical device electrode of the present invention on the current collector by roll pressing, the conditions other than the roll pressing temperature can, for example, be made as follows. That is, at the time of the first stage and the second stage and later roll pressing, the shaping speed is preferably 0.5 to 35 m/min, more preferably 1 to 30 m/min, while the linear pressure between the rolls is preferably 0.05 to 3 kN/cm, more preferably 0.05 to 2.5 kN/cm.

The thus obtained electrochemical device electrode of the present invention is obtained by using the above-mentioned composite particles for electrochemical device electrode of the present invention for the electrode active material layer, so is high in uniformity of thickness of the electrode active material layer and adhesion with respect to the current collector and is excellent in low temperature cycle characteristic. For this reason, the electrochemical device electrode of the present invention can be suitably used as an electrode for various types of electrochemical devices, and it can be prticularly suitably used as electrodes of a lithium ion secondary cell and lithium ion capacitor.

EXAMPLES

Below, examples and comparative examples will be given to explain the present invention more specifically. In the examples, the "parts" and "%" are based on weight unless otherwise indicated.

Note that, the definitions of properties and the methods of evaluation are as follows.

Further, in the following examples, the example of application of the composite particles for electrochemical device electrode and electrochemical device electrode of the present invention to a positive electrode of a lithium ion capacitor will be explained, but these are not limited to a positive electrode of a lithium ion capacitor. Similar effects can be obtained even if applied to an electrode for another electrochemical device, for example, an electrode of a lithium ion battery.

<Volume Average Particle Size of Particle-Shaped Binder>

The volume average particle size of each particle-shaped binder was found by using a particle size distribution measurement system by light diffraction using laser light (Coulter Counter LS230, made by Beckman Coulter) so as to measure the particle size which corresponds to the 50% integrated value in the integrated particle size distribution.

<Gel Content of Particle-Shaped Binder>

An aqueous dispersion of the particle-shaped binder was air dried on a PTFE Petri disk for 48 hours to prepare a thickness 100 $\mu$m film of the particle-shaped binder. The obtained film was heated in a 100°C oven for 30 minutes and cut to a 2 mm $\times$ 2 mm size. Next, the cut film was precisely weighed in a range of 0.2 to 0.3 g. This value was made the weight B0 of the binder before extraction. Next, this film was placed in a weight B1 cylindrically shaped filter paper thimble (product name "No. 86R", made by Toyo Roshi). The cylindrically shaped filter paper thimble containing the film was placed in a Soxhlet extractor, then was extracted using a tetrahydrofuran solvent 100 ml over 24 hours. Next, the extracted cylindrically shaped filter paper thimble containing the film was air-dried for 12 hours, then was furthermore vacuum dried at 50°C for 1 hour. Further, the weight B2 of the cylindrically shaped filter paper thimble containing the film after vacuum drying was measured and the following formula (1) was used to calculate the gel content (%).

$$\text{Gel content } (\%) = [(B2-B1)/B0] \times 100 \cdots (1)$$

<Glass Transition Temperature (Tg) of Particle-Shaped Binder>

An aqueous dispersion of the particle-shaped binder was air dried on a PTFE Petri disk for one week to prepare a width 1 cm $\times$ length 2 cm $\times$ thickness 200 $\mu$m film of the particle-shaped binder. Then this film was given a minimum tension of 98.0 mN using a viscoelasticity spectrometer (DMS) (made by SII Nanotechnology, DMS6100 standard model), was raised in temperature by 5°C per minute from -50°C to +150°C, and was measured in the tensile mode (correction of stretching of sample: adjusted by automatic measurement mode). The peak top temperature of the tangent of loss (tan$\delta$) at 1 Hz was made the "glass transition temperature".

<Peel Strength>

Positive electrodes which were obtained in each of the examples and comparative examples were cut into a width 1 cm × length 10 cm rectangle shapes. The cut positive electrodes were fastened with the positive electrode active material layer surfaces facing up. Cellophane tape was attached to the surface of the negative electrode active material layer, the cellophane tape was pulled off from one end of the test piece at a speed of 50 mm/min in a 180° direction, and the stress at that time was measured. Further, this measurement was performed 10 times, the average value was found, and that was used as the peel strength. This was judged by the following criteria. Note that, the larger the peel strength, the higher the adhesion strength in the positive electrode active material layer and adhesion strength between the positive electrode active material layer and current collector that can be judged.

     A: Peel strength of 20N/m or more
     B: Peel strength of 7N/m to less than 20N/m
     C: Peel strength of 3N/m to less than 7N/m
     D: Peel strength of less than 3N/m
     E: Unable to be evaluated

<Uniformity of Thickness>

Positive electrodes which were obtained in the examples and comparative examples were cut into width direction (TD direction) 10 cm × length direction (MD direction) 1 m pieces. The cut positive electrodes were measured for thickness at three points at equal intervals in the TD direction and at five points at equal intervals in the MD reaction for a total of 15 points (3 points x 5 points). The average value A of the thickness and the value B furthest from the average value were found for each. From the average value A and the furthest value B, the following formula (2) was used to calculate the unevenness of thickness. The following criteria were used to evaluate the shapeability. The smaller the unevenness of thickness, the better the uniformity of thickness can be judged to be.

$$\text{Uniformity of thickness (\%)} = (|A-B|) \times 100/A \cdots (2)$$

     A: Uniformity of thickness of less than 5%
     B: Uniformity of thickness of 5% to less than 10%
     C: Uniformity of thickness of 10% to less than 15%
     D: Uniformity of thickness of 15% or more
     E: Holes formed in positive electrode active material layer.

<Low Temperature Cycle Characteristic>

Laminate type lithium ion capacitors (evaluation cells) which were obtained in the examples and comparative examples were charged under conditions of a temperature of -20°C by a 2000 mA constant current up to 3.6V, then were supplied with 3.6V constant voltage. This constant current-constant voltage charging was performed for 1 hour. Next, the capacitors were discharged by a 200 mA constant current until a voltage of 2.2V. Further, under such charging and discharging conditions, a charging-discharging test was repeated 1000 times. The DC resistance $IR_{10th}$ of each evaluation cell after the 10th charging-discharging test and the DC resistance $IR_{1000th}$ of each evaluation cell after the 1000th charging-discharging test were measured. The rate of increase of resistance was calculated in accordance with the following formula (3). The following criteria were used to evaluate the low temperature cycle characteristic. The smaller the rate of increase of resistance, the better the low temperature cycle characteristic can be judged to be.

$$\text{Rate of increase of resistance (\%)} = ((IR_{1000th}/IR_{10th}) \times 100) - 100 \cdots (3)$$

     A: Rate of increase of resistance of less than 10%
     B: Rate of increase of resistance of 10% to less than 20%
     C: Rate of increase of resistance of 20% to less than 30%
     D: Rate of increase of resistance of 30% or more
     E: Unable to be evaluated

(Production Example 1: Production of Particle-Shaped Binder A)

In a reactor equipped with a mechanical stirrer and condenser, under a nitrogen atmosphere, deionized water 210 parts was charged. While stirring, the mixture was heated to 70°C. 1.96% potassium persulfate aqueous solution 25.5 parts was added to the reactor. Next, into a container separate from the above one with the mechanical stirrer attached, under a nitrogen atmosphere, butyl acrylate 81.2 parts, ethyl methacrylate 16.3 parts, methacrylic acid 2.4 parts, allyl methacrylate 10.1 parts, concentration 30% alkyldiphenyloxide disulfonate (DOWFAX (Registered Trademark) 2A1, made by Dow Chemical) 3.34 parts, and deionized water 22.7 parts were added. The mixture was stirred to emulsify it and prepare a monomer mixture. Further, in the state with this monomer mixture stirred to emulsify it, the mixture was added over 2.5 hours by a certain speed into a reactor which was charged with deionized water 210 parts and a potassium persulfate aqueous solution and made to react until a polymerization conversion rate of 95% to obtain an aqueous dispersion of the particle-shaped binder A. The composition of the obtained particle-shaped binder A was butyl acrylate units 81.2%, ethyl methacrylate units 16.3%, methacrylic acid units 2.4%, and allyl methacrylate units 0.1%. Further, the particle-shaped binder A had a glass transition temperature (Tg) of -25°C, a gel content of 87%, and a volume average particle size of 340 nm.

(Production Examples 2 to 12: Production of Particle-Shaped Binders B to L)

Except for using, as the monomers which are used for polymerization, the monomers which are shown in Table 1 in the amounts which are shown in Table 1, the same procedures were followed as in Production Example 1 to obtain aqueous dispersions of the particle-shaped binders B to L. The obtained particle-shaped binders B to L had compositions, glass transition temperatures, gel contents, and volume average particle sizes which are shown in Table 1.

Table 1

EP 2 858 080 A1

Table 1

| | | | Production Examples | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 | 12 |
| | | | Binder A | Binder B | Binder C | Binder D | Binder E | Binder F | Binder G | Binder H | Binder I | Binder J | Binder K | Binder L |
| Monomer composition | | | | | | | | | | | | | | |
| | Butyl acrylate | (parts) | 81.2 | 35 | 81.3 | 54.9 | 55 | 97.5 | 97.6 | 42 | 18 | 46 | - | 35 |
| | Ethyl methacrylate | (parts) | 16.3 | 62.5 | 16.3 | 42.6 | 42.6 | - | - | 55.5 | 79.5 | 51.5 | - | 62.57 |
| | Methyl methacrylate | (parts) | - | - | - | - | - | - | - | - | - | - | 97.5 | - |
| | Methacrylic acid | (parts) | 2.4 | 2.4 | 2.4 | 2.4 | 2.4 | 2.4 | 2.4 | 2.4 | 2.4 | 2.4 | 2.4 | 2.4 |
| | Allyl methacrylate | (parts) | 0.1 | 0.1 | - | 0.1 | - | 0.1 | - | 0.1 | 0.1 | 0.1 | 0.1 | 0.03 |
| Polymer composition | | | | | | | | | | | | | | |
| | Butyl acrylate units | (%) | 81.2 | 35 | 81.3 | 54.9 | 55 | 97.5 | 97.6 | 42 | 18 | 46 | - | 35 |
| | Ethyl methacrylate units | (%) | 16.3 | 62.5 | 16.3 | 42.6 | 42.6 | - | - | 55.5 | 79.5 | 51.5 | - | 62.57 |
| | Methyl methacrylate units | (%) | - | - | - | - | - | - | - | - | - | - | 97.5 | - |
| | Methacrylic acid units | (%) | 2.4 | 2.4 | 2.4 | 2.4 | 2.4 | 2.4 | 2.4 | 2.4 | 2.4 | 2.4 | 2.4 | 2.4 |
| | Allyl methacrylate units | (%) | 0.1 | 0.1 | - | 0.1 | - | 0.1 | - | 0.1 | 0.1 | 0.1 | 0.1 | 0.03 |
| Glass transition temperature | | (°C) | -25 | 31 | -25 | 3 | 3 | -38 | -38 | 21 | 48 | 15 | 115 | 31 |
| Gel content | | (%) | 87 | 82 | 38 | 86 | 37 | 81 | 52 | 81 | 80 | 85 | 75 | 55 |
| Volume average particle size | | (nm) | 340 | 353 | 324 | 354 | 321 | 360 | 359 | 345 | 361 | 342 | 335 | 342 |

(Example 1)

<Production of Slurry for Positive Electrode>

A positive electrode active material constituted by specific surface area 2000 m'/g alkali activation activated carbon 100 parts, a conductive material constituted by acetylene black 7.5 parts, a dispersant constituted by a 1.5% aqueous solution of sodium carboxymethyl cellulose (Serogen BSH-6, made by Dai-Ichi Kogyo Seiyaku Co., Ltd.) 1.4 parts converted to solid content, an aqueous dispersion of the particle-shaped binder A which was obtained in Production Example 1, 1.5 parts converted to solid content, and an aqueous dispersion of the particle-shaped binder B which was obtained in Production Example 2, 4.5 parts converted to solid content were made to disperse in ion exchanged water and were adjusted to give a solid content concentration of 20%. Next, a planetary mixer was used to mix and disperse the components to thereby obtain a slurry for positive electrode.

<Production of Composite Particles for Positive Electrode>

The above obtained slurry for positive electrode was granulated using a spray dryer under conditions of a speed of a rotary disk type atomizer (diameter: 65 mm) of 25,000 rpm, a hot air temperature of 150°C, and a temperature of the particle recovery cutlet of 90°C for spray drying granulation to obtain composite particles for positive electrode.

<Production of Positive Electrode)>

Further, the above obtained composite particles for positive electrode, a long sheet-shaped support (PET film (thickness 50 $\mu$m, tensile strength 200 MPa) roughened on its surface to give a surface roughness Ra of 0.4 $\mu$m by sand blasting), and a long sheet-shaped aluminum expand metal current collector (thickness 30 $\mu$m sheet-shaped aluminum finished being coated by 4 $\mu$m adhesive layers on its two surfaces and formed with diameter 1 mm holes to give an aperture rate of 50%) were used to obtain, by using the system which is shown in FIG. 1, a positive electrode comprised of a current collector on the two surfaces of which average thickness 90 $\mu$m positive electrode active material layers were provided.

Note that, in the system which is shown in FIG. 1, the positive electrode was produced in the following way. That is, composite particles for positive electrode which were stored in a hopper H1 were compressed by pressing by a pair of rolls S1 and S2 together with a sheet-shaped support which was fed out from a roll B1 (first stage of roll pressing) whereby the sheet-shaped support was formed with a layer comprised of composite particles for positive electrode. Further, similarly, composite particles for positive electrode which were stored in a hopper H2 were compressed by pressing by a pair of rolls S3 and S4 together with a sheet-shaped support which was fed out from a roll B2 (first stage of roll pressing) whereby the sheet-shaped support was formed with a layer comprised of composite particles for positive electrode.

Further, the layer comprised of the composite particles for positive electrode which was formed on the sheet-shaped support which was fed out from the roll B1 and the layer comprised of the composite particles for positive electrode which was formed on the sheet-shaped support which was fed out from the roll B2 were pressed together with a current collector by a pair of rolls A1 and A2 whereby the layers comprised of the composite particles for positive electrode were transferred from the sheet-shaped supports to the two surfaces of the current collector, then were compressed by pressing by a pair of rolls A3 and A4 (second stage of roll pressing) whereby positive electrode active material layers were formed on the two surfaces of the current collector. Note that, at this time, the sheet-shaped supports which were fed out from the rolls B1 and B2 were peeled off from the layers comprised of the composite particles for positive electrode and taken up by the rolls B3 and B4. In the examples, for the rolls S1, S2, S3, and S4, the clearances between the rolls were made 100 $\mu$m, the roll temperatures (first stage roll pressing temperature) were made 45°C, and the liner pressures were made 0.1 kN/cm. Further, for the rolls A1 and A2, the clearance between the rolls was made 50 $\mu$m, the roll temperature was made 30°C, and the liner pressure was made 1 kN/cm, while for the rolls A3 and A4, the clearance between the rolls was made 100 $\mu$m, the roll temperature (second stage roll pressing temperature) was made 100°C, and the liner pressure was made 1 kN/cm. Note that, the peripheral speeds of the rolls were made 12 m/min.

<Production of Slurry for Negative Electrode>

A negative electrode active material constituted by volume average particle size 2.7 $\mu$m graphite (KS-4, made by Timcal) 100 parts, a dispersant constituted by carboxymethyl cellulose sodium salt in a 1.5% aqueous solution (Product No. 2200, made by Daicel Chemical Industry) 2 parts converted to solid content, a conductive material constituted by acetylene black (Denka Black Powder, made by Denki Kagaku Kogyo) 5 parts, a binder constituted by a glass transition temperature -40°C and volume average particle size 0.25 $\mu$m diene polymer (copolymer obtained by emulsion polymerization of styrene 60 parts, butadiene 35 parts, and itaconic acid 5 parts) in a 40% aqueous dispersion 3 parts converted to solid content, and ion exchanged water were mixed by a planetary mixer to give a total solid content concentration of 35% to obtain a slurry for negative electrode.

<Production of Negative Electrode>

As a base material, thickness 38 $\mu$m polyethylene terephthalate film (made by Lintec, contact angle of release treated surface of base material with water: 97°) treated for release by an alkyd resin was used. The base material was run in the horizontal direction at a 40 m/min speed while being coated with the above obtained slurry for negative electrode which was discharged from a die and was dried at 120°C for 5 minutes to obtain a base material on which a thickness 60 $\mu$m negative electrode active material layer was provided. This was taken up.

Next, the above formed base material which had the negative electrode active material layer and a perforated current collector constituted by a thickness 20 $\mu$m, aperture rate 50 area% copper expand metal were superposed and run through a temperature 100°C continuous roll press to bond the negative electrode active material layer and the perforated current collector, then the base material was separated from the negative electrode active material layer by using a roll. Further, finally, in order to form a negative electrode active material layer on the other surface of the perforated current collector, the above formed base material which had the negative electrode active material layer was run through a continuous type roll press together with the perforated current collector on the other surface of which the negative electrode active material layer was formed so as to bond the negative electrode active material layer and the perforated current collector, then the base material was separated from the negative electrode active material layer by using a roll to thereby obtain a negative electrode comprised of a perforated current current collector on the two surfaces of which single-side thickness 30 $\mu$m negative electrode active material layers were formed.

<Fabrication of Evaluation Cell>

Further, the above fabricated positive electrode and negative electrode were cut to form uncoated parts where the active material layers were not formed of a vertical 2 cm $\times$ horizontal 2 cm size and parts where the active material layers were formed of a vertical 5 cm $\times$ horizontal 5 cm size. Note that, at this time, the uncoated parts were formed by extending, as they were, single sides of the 5 cm x 5 cm square shapes where the active material layers were formed. Further, 10 sets of the thus cut out positive electrodes and 11 sets of the negative electrodes were respectively prepared. These were stacked and ultrasonically welded in the state with the uncoated parts superposed, then a tab material comprised of aluminum for the positive electrodes and a tab material comprised of nickel for the negative electrodes were joined by ultrasonic welding to the respectively stacked and welded uncoated parts to thereby obtain electrodes for measurement. Note that, as the tab materials for the positive electrodes and for the negative electrodes, ones of sizes of vertical 7 cm $\times$ horizontal 1 cm $\times$ thickness 0.01 cm were used. Further, the obtained electrodes for measurement were dried in vacuo at 200°C for 24 hours. As separators, thickness 35 $\mu$m cellulose/rayon mix nonwoven fabrics were used. The positive electrodes and negative electrodes were arranged so that the tab weld parts became opposite sides. The positive electrodes and negative electrodes were alternately stacked via the separators. Note that, at this time, these were stacked so that the electrodes which were positioned at the outermost parts of the laminate became the negative electrodes. Separators were arranged at the topmost part and bottommost part, and the four sides were taped shut.

Next, as lithium electrodes, pieces of lithium metal foil (thickness 51 $\mu$m, vertical 5 cm $\times$ horizontal 5 cm) press bonded with thickness 80 $\mu$m stainless steel mesh were used. The lithium electrodes were stacked so as to completely face the negative electrodes at the outermost parts whereby single lithium electrodes were arranged at the top part and bottom part of the laminate. Further, the tab welded parts of the stainless steel meshes which form the current collectors of the two lithium electrodes which were arranged at the top part and bottom part of the laminate were resistance welded to the tab weld parts of the negative electrodes.

Further, the laminate comprised of the above obtained lithium electrodes arranged at the top part and the bottom part was set inside a deep drawn bottom sheath laminate film, then this was covered by a top sheath laminate film. The three sides of the bottom sheath laminate film and top sheath laminate film were melt bonded, then the electrolytic solution was impregnated in vacuo and the remaining side was melt bonded to fabricate a film type (film laminate type) hybrid capacitor (evaluation cell). Note that, as the electrolytic solution, a mixed solvent (ethylene carbonate:diethyl carbonate:propylene carbonate=3:4:1 (weight ratio)) in which $LiPF_6$ was made to dissolve to a concentration of 1 mol/liter was used.

Further, the above obtained positive electrode was evaluated in accordance with the above-mentioned methods for the peel strength and uniformity of thickness, while the above obtained evaluation cell was evaluated for the low temperature cycle characteristic. The results are shown in Table 2.

(Examples 2 to 6)

Except for using, at the time of producing the positive electrode, instead of the aqueous dispersion of the particle-shaped binder A, the aqueous dispersion of the particle-shaped binder C which was obtained in Production Example 3 (Example 2), the aqueous dispersion of the particle-shaped binder D which was obtained in Production Example 4 (Example 3), the aqueous dispersion of the particle-shaped binder E which was obtained in Production Example 5 (Example 4), the aqueous dispersion of the particle-shaped binder F which was obtained in Production Example 6 (Example 5), and the aqueous dispersion of the particle-shaped binder G which was obtained in Production Example 7 (Example 6), the same procedures were followed as in Example 1 to prepare positive electrodes and evaluation cells and the same procedures were followed to evaluate them. The results are shown in Table 2.

(Examples 7 and 8)

Except for using, at the time of producing the positive electrode, instead of the aqueous dispersion of the particle-shaped binder B, the aqueous dispersion of the particle-shaped binder H which was obtained in Production Example 8 (Example 7) and the aqueous dispersion of the particle-shaped binder I which was obtained in Production Example 9 (Example 8), the same procedures were followed as in Example 1 to prepare positive electrodes and evaluation cells and the same procedures were followed to evaluate them. The results are shown in Table 2.

(Example 9)

Except for changing, at the time of producing the positive electrode, the amount of the aqueous dispersion of the particle-shaped binder A from 1.5 parts to 3 parts converted to solid content and changing the amount of the aqueous dispersion of the particle-shaped binder B from 4.5 parts to 3 parts converted to solid content, the same procedure was followed as in Example 1 to prepare a positive electrode and evaluation cell and the same procedure was followed to evaluate them. The results are shown in Table 2.

(Example 10)

Except for changing, at the time of producing the positive electrode, the amount of the aqueous dispersion of the particle-shaped binder B from 4.5 parts to 8.5 parts converted to solid content, the same procedure was followed as in Example 1 to prepare a positive electrode and evaluation cell and the same procedure was followed to evaluate them. The results are shown in Table 2.

(Example 11)

Except for changing, at the time of producing the positive electrode, the first stage roll pressing temperature (that is, the temperatures of the rolls S1, S2, S3, and S4 which are shown in FIG. 1) from 45°C to 60°C, the same procedure was followed as in Example 2 to prepare a positive electrode and evaluation cell and the same procedure was followed to evaluate them. The results are shown in Table 2.

(Example 12)

Except for changing, at the time of producing the positive electrode, the first stage roll pressing temperature (that is, the temperatures of the rolls S1, S2, S3, and S4 which are shown in FIG. 1) from 45°C to 25°C, the same procedure was followed as in Example 5 to prepare a positive electrode and evaluation cell and the same procedure was followed to evaluate them. The results are shown in Table 2.

(Example 13)

Except for changing, at the time of producing the positive electrode, the second stage roll pressing temperature (that is, the temperatures of the rolls A3 and A4 which are shown in FIG. 1) from 100°C to 80°C, the same procedure was followed as in Example 1 to prepare a positive electrode and evaluation cell and the same procedure was followed to evaluate them. The results are shown in Table 2.

(Example 14)

Except for changing, at the time of producing the positive electrode, the second stage roll pressing temperature (that is, the temperatures of the rolls A3 and A4 which are shown in FIG. 1) from 100°C to 120°C, the same procedure was followed as in Example 1 to prepare a positive electrode and evaluation cell and the same procedure was followed to evaluate them. The results are shown in Table 2.

(Comparative Example 1)

Except for using, at the time of producing the positive electrode, instead of the aqueous dispersion of the particle-shaped binder A, the aqueous dispersion of the particle-shaped binder J which was obtained in Production Example 10, the same procedure was followed as in Example 8 to prepare a positive electrode and evaluation cell and the same procedure was followed to evaluate them. The results are shown in Table 2.

(Comparative Examples 2 to 4)

Except for using, at the time of producing the positive electrode, instead of the aqueous dispersion of the particle-shaped binder A, the aqueous dispersion of the particle-shaped binder D which was obtained in Production Example 4 (Comparative Example 2), the aqueous dispersion of the particle-shaped binder K which was obtained in Production Example 11 (Comparative Example 3), and the aqueous dispersion of the particle-shaped binder L which was obtained in Production Example 12 (Comparative Example 4), the same procedures were followed as in Example 1 to prepare positive electrodes and evaluation cells and the same procedures were followed to evaluate them. The results are shown in Table 2.

(Comparative Example 5)

Except for changing, at the time of producing the positive electrode, the amount of the aqueous dispersion of the particle-shaped binder A from 1.5 parts to 4.5 parts converted to solid content and the amount of the aqueous dispersion of the particle-shaped binder B from 4.5 parts to 1.5 parts converted to solid content, the same procedure was followed as in Example 1 to prepare a positive electrode and evaluation cell and the same procedure was followed to evaluate them. The results are shown in Table 2.

(Comparative Example 6)

Except for, at the time of producing the positive electrode, not using the aqueous dispersion of the particle-shaped binder A and changing the amount of the aqueous dispersion of the particle-shaped binder B from 4.5 parts to 6 parts converted to solid content, the same procedure was followed as in Example 1 to prepare a positive electrode and evaluation cell and the same procedure was followed to evaluate them. The results are shown in Table 2.

Table 2

Table 2

| | | | Examples | | | | | | | | | | | | | | Comparative Examples | | | | | |
|---|---|---|---|---|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 1 | 2 | 3 | 4 | 5 | 6 |
| First particle-shaped binder | | | | | | | | | | | | | | | | | | | | | | |
| Type | | | Binder A | Binder C | Binder D | Binder E | Binder F | Binder G | Binder A | Binder A | Binder A | Binder A | Binder C | Binder F | Binder A | Binder A | Binder J | Binder A | Binder A | Binder A | Binder A | Not used |
| Monomer composition | | | | | | | | | | | | | | | | | | | | | | |
| Butyl acrylate units | | (%) | 81.2 | 81.3 | 54.9 | 55 | 97.5 | 97.6 | 81.2 | 81.2 | 81.2 | 81.2 | 81.3 | 97.5 | 81.2 | 81.2 | 46 | 81.2 | 81.2 | 81.2 | 81.2 | – |
| Ethyl methacrylate units | | (%) | 16.3 | 16.3 | 42.6 | 42.6 | – | – | 16.3 | 16.3 | 16.3 | 16.3 | 16.3 | – | 16.3 | 16.3 | 51.5 | 16.3 | 16.3 | 16.3 | 16.3 | – |
| Methyl methacrylate units | | (%) | – | – | – | – | – | – | – | – | – | – | – | – | – | – | – | – | – | – | – | – |
| Methacrylic acid units | | (%) | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 | – |
| Allyl methacrylate units | | (%) | 0.1 | – | 0.1 | – | 0.1 | – | 0.1 | 0.1 | 0.1 | 0.1 | – | 0.1 | 0.1 | 0.1 | 0.1 | 0.1 | 0.1 | 0.1 | 0.1 | – |
| Glass transition temperature | | (°C) | −25 | −25 | 3 | 3 | −38 | −38 | −25 | −25 | −25 | −25 | −25 | −38 | −25 | −25 | 15 | −25 | −25 | −25 | −25 | – |
| Gel content | | (%) | 87 | 38 | 86 | 37 | 81 | 52 | 87 | 87 | 87 | 87 | 38 | 81 | 87 | 87 | 85 | 87 | 87 | 87 | 87 | – |
| Volume average particle size | | (nm) | 340 | 324 | 354 | 321 | 360 | 359 | 340 | 340 | 340 | 340 | 324 | 360 | 340 | 340 | 342 | 340 | 340 | 340 | 340 | – |
| Second particle-shaped binder | | | | | | | | | | | | | | | | | | | | | | |
| Type | | | Binder B | Binder B | Binder B | Binder B | Binder B | Binder B | Binder H | Binder I | Binder B | Binder B | Binder B | Binder B | Binder B | Binder B | Binder I | Binder D | Binder K | Binder L | Binder B | Binder B |
| Monomer composition | | | | | | | | | | | | | | | | | | | | | | |
| Butyl acrylate units | | (%) | 35 | 35 | 35 | 35 | 35 | 35 | 42 | 18 | 35 | 35 | 35 | 35 | 35 | 35 | 18 | 54.9 | – | 35 | 35 | 35 |
| Ethyl methacrylate units | | (%) | 62.5 | 62.5 | 62.5 | 62.5 | 62.5 | 62.5 | 55.5 | 79.5 | 62.5 | 62.5 | 62.5 | 62.5 | 62.5 | 62.5 | 79.5 | 42.6 | – | 62.57 | 62.5 | 62.5 |
| Methyl methacrylate units | | (%) | – | – | – | – | – | – | – | – | – | – | – | – | – | – | – | – | 97.5 | – | – | – |
| Methacrylic acid units | | (%) | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 |
| Allyl methacrylate units | | (%) | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.03 | 0.1 | 0.1 |
| Glass transition temperature | | (°C) | 31 | 31 | 31 | 31 | 31 | 31 | 21 | 48 | 31 | 31 | 31 | 31 | 31 | 31 | 48 | 3 | 115 | 31 | 31 | 31 |
| Gel content | | (%) | 82 | 82 | 82 | 82 | 82 | 82 | 81 | 80 | 82 | 82 | 82 | 82 | 82 | 82 | 80 | 86 | 75 | 55 | 82 | 82 |
| Volume average particle size | | (nm) | 353 | 353 | 353 | 353 | 353 | 353 | 345 | 361 | 353 | 353 | 353 | 353 | 353 | 353 | 361 | 354 | 335 | 342 | 353 | 353 |
| Composition of positive electrode | | | | | | | | | | | | | | | | | | | | | | |
| Positive electrode active material | | (parts) | 100 | 100 | 100 | 100 | 100 | 100 | 100 | 100 | 100 | 100 | 100 | 100 | 100 | 100 | 100 | 100 | 100 | 100 | 100 | 100 |
| First particle-shaped binder | | (parts) | 1.5 | 1.5 | 1.5 | 1.5 | 1.5 | 1.5 | 1.5 | 1.5 | 3 | 1.5 | 1.5 | 1.5 | 1.5 | 1.5 | 1.5 | 1.5 | 1.5 | 1.5 | 4.5 | – |
| Second particle-shaped binder | | (parts) | 4.5 | 4.5 | 4.5 | 4.5 | 4.5 | 4.5 | 4.5 | 4.5 | 3 | 8.5 | 4.5 | 4.5 | 4.5 | 4.5 | 4.5 | 4.5 | 4.5 | 4.5 | 1.5 | 6 |
| Conductive material | | (parts) | 7.5 | 7.5 | 7.5 | 7.5 | 7.5 | 7.5 | 7.5 | 7.5 | 7.5 | 7.5 | 7.5 | 7.5 | 7.5 | 7.5 | 7.5 | 7.5 | 7.5 | 7.5 | 7.5 | 7.5 |
| Dispersant | | (parts) | 1.4 | 1.4 | 1.4 | 1.4 | 1.4 | 1.4 | 1.4 | 1.4 | 1.4 | 1.4 | 1.4 | 1.4 | 1.4 | 1.4 | 1.4 | 1.4 | 1.4 | 1.4 | 1.4 | 1.4 |
| Positive electrode roll pressing temperature | | | | | | | | | | | | | | | | | | | | | | |
| First stage pressing temperature | | (°C) | 45 | 45 | 45 | 45 | 45 | 45 | 45 | 45 | 45 | 45 | 60 | 25 | 45 | 45 | 45 | 45 | 45 | 45 | 45 | 45 |
| Second stage pressing temperature | | (°C) | 100 | 100 | 100 | 100 | 100 | 100 | 100 | 100 | 100 | 100 | 100 | 100 | 80 | 120 | 100 | 100 | 100 | 100 | 100 | 100 |
| Evaluation | | | | | | | | | | | | | | | | | | | | | | |
| Uniformity of thickness of positive electrode active component layer | | | A | A | B | B | A | A | C | A | B | C | C | B | A | A | D | E | A | A | D | F |
| Peel strength of positive electrode active component layer | | | A | C | A | C | B | C | A | B | A | A | B | A | B | A | B | B | E | D | B | E |
| Low temperature cycle characteristic | | | A | A | B | B | A | A | C | A | B | B | C | A | A | A | D | E | E | C | E | F |

As shown in Table 2, when using a binder constituted by the first particle-shaped binder and the second particle-shaped binder predetermined by the present invention and making the ratio of the second particle-shaped binder in a predetermined range, the obtained electrode was excellent in uniformity of thickness of the electrode active material layer, was high in adhesion of the electrode active material layer and the current collector, and further was excellent in low temperature cycle characteristic in the case of making a lithium ion capacitor (Examples 1 to 14).

On the other hand, when using a first particle-shaped binder (binder with a glass transition temperature lower than the second particle-shaped binder) constituted by one with a glass transition temperature of over 5°C and when using a second particle-shaped binder (binder with a glass transition temperature higher than the first particle-shaped binder) constituted by one with a glass transition temperature of less than 10°C, the obtained electrode was low in uniformity of thickness of the electrode active material layer and further was inferior in low temperature cycle characteristic when used as a lithium ion capacitor (Comparative Examples 1 and 2).

When using a second particle-shaped binder (binder with a glass transition temperature higher than the first particle-shaped binder) constituted by one with a glass transition temperature of over 80°C and when using a second particle-shaped binder (binder with a glass transition temperature higher than the first particle-shaped binder) constituted by one with a gel content of less than 70 wt%, the obtained electrode was inferior in peel strength and was inferior in low temperature cycle characteristic when made into a lithium ion capacitor (Comparative Examples 3 and 4).

Further, when the ratio of content of the second particle-shaped binder was too small, the obtained electrode was low in uniformity of thickness of the electrode active material layer and further was inferior in low temperature cycle characteristic when made into a lithium ion capacitor (Comparative Example 5).

Furthermore, when not mixing in the first particle-shaped binder (binder with a glass transition temperature lower than the second particle-shaped binder), the obtained electrode was low in uniformity of thickness of the electrode active material layer, and inferior in peel strength as well, and further was inferior in low temperature cycle characteristic when made into a lithium ion capacitor (Comparative Example 6).

## Claims

1. Composite particles for electrochemical device electrode comprising a first particle-shaped binder with a glass transition temperature of 5°C or less, a second particle-shaped binder with a glass transition temperature of 10 to 80°C and with a gel content of 70 wt% or more, and an electrode active material, wherein
a ratio of content of said second particle-shaped binder is 30 to 95 wt% in the total binder which is contained in said composite particles for electrochemical device electrode.

2. The composite particles for electrochemical device electrode as set forth in claim 1, wherein a difference of the glass transition temperature of said first particle-shaped binder and the glass transition temperature of said second particle-shaped binder is 20°C or more.

3. The composite particles for electrochemical device electrode as set forth in claim 1 or 2, wherein the gel content of said first particle-shaped binder is 35 wt% or more.

4. The composite particles for electrochemical device electrode as set forth in any one of claims 1 to 3, wherein said first particle-shaped binder and said second particle-shaped binder contain polymers which contain monomer units which have acidic functional groups in amounts of 0.5 wt% or more.

5. An electrochemical device electrode obtained by laminating, on a current collector, an active material layer which contains the composite particles for electrochemical device electrode as set forth in any of claims 1 to 4.

6. An electrochemical device comprising the electrochemical device electrode as set forth in claim 5.

7. A method of production of the composite particles for electrochemical device electrode as set forth in any one of claims 1 to 4, comprising
a step of dispersing said first particle-shaped binder, said second particle-shaped binder, and said electrode active material in water to obtain a slurry, and
a step of spray drying said slurry to form particles.

8. A method of production of the composite particles for electrochemical device electrode as set forth in any one of claims 1 to 4, comprising
a step of dispersing said first particle-shaped binder and said second particle-shaped binder in water to obtain a binder dispersion, and

a step of fluidizing said electrode active material in a tank while spraying said electrode active material with said binder dispersion for fluidized bed granulation.

9. A method of production of an electrochemical device electrode having an active material layer which is laminated on a current collector comprising

a step of roll pressing composite particles for electrochemical device electrode which contain a first particle-shaped binder with a glass transition temperature of 5°C or less, a second particle-shaped binder with a glass transition temperature of 10 to 80°C and with a gel content of 70 wt% or more, and an electrode active material by two stages or more so as to form said active material layer.

10. The method of production of an electrochemical device electrode as set forth in claim 9, wherein

a first stage roll pressing temperature is 60°C or less and a second stage or further roll pressing temperature is 80°C or more when roll pressing said composite particles for electrochemical device electrode by two stages or more.

Fig. 1

## INTERNATIONAL SEARCH REPORT

| International application No. |
|---|
| PCT/JP2013/064881 |

A. CLASSIFICATION OF SUBJECT MATTER
*H01G11/22*(2013.01)i, *H01M4/139*(2010.01)i, *H01M4/36*(2006.01)i, *H01M4/62* (2006.01)i

According to International Patent Classification (IPC) or to both national classification and IPC

B. FIELDS SEARCHED

Minimum documentation searched (classification system followed by classification symbols)
H01G11/22, H01M4/139, H01M4/36, H01M4/62

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2010-123842 A (Nippon Zeon Co., Ltd.), 03 June 2010 (03.06.2010), paragraphs [0001], [0031] to [0033], [0043], [0044], [0048], [0059] to [0062] (Family: none) | 1-10 |
| A | WO 2007/032374 A1 (Nippon Zeon Co., Ltd.), 22 March 2007 (22.03.2007), paragraphs [0001], [0050] to [0052], [0066], [0071] & JP 4985404 B | 1-10 |
| A | WO 2012/049746 A1 (Toyota Motor Corp.), 19 April 2012 (19.04.2012), paragraphs [0031], [0037] to [0039]; fig. 5 & US 2012/0177990 A1 & CN 102576875 A & KR 10-2012-0067997 A | 1,9 |

☒ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 June, 2013 (17.06.13) | 25 June, 2013 (25.06.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2013/064881 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2001-332265 A  (Nippon Zeon Co., Ltd.),<br>30 November 2001  (30.11.2001),<br>paragraph [0016]<br>(Family: none) | 1,9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4432906 B

- JP 2001176757 A